## Europäisches Patentamt
## European Patent Office
## Office européen des brevets

(19)

(11) Numéro de publication: **0 006 653**
A2

(12)

# DEMANDE DE BREVET EUROPEEN

(21) Numéro de dépôt: 79200296.6

(22) Date de dépôt: 11.06.79

(51) Int. Cl.³: **F 03 B 17/04**, F 03 G 3/00

(30) Priorité: 23.06.78 FR 7818878

(43) Date de publication de la demande: **09.01.80**
**Bulletin 80/1**

(84) Etats contractants désignés: **BE CH DE GB LU NL SE**

(71) Demandeur: **Blain, Alfred, 22, avenue de l'Opéra,**
**F-75001 Paris (FR)**

(72) Inventeur: **Blain, Alfred, 22, avenue de l'Opéra,**
**F-75001 Paris (FR)**

(74) Mandataire: **Blain, Max, Cabinet A.M.**
**BLAIN 22, avenue de l'Opéra, F-75001 Paris (FR)**

(54) Procédé de production d'énergie sans consommation de matière dans un champ de gravité et dispositif de mise en oeuvre.

(57) L'invention permet l'utilisation du champ de gravité au moyen d'une masse recyclable par entretien d'un déséquilibre permanent.

Le corps déformable 1 est lié à la chaîne 11 dans la partie $p_1$ pour présenter une masse volumique supérieure à celle du milieu 13 et est lié à la chaîne 47 en $p_2$ pour présenter une masse volumique inférieure après allongement par l'entraînement plus rapide de 18. En 27, une fraction du corps passe de 13 à 47 et en 35 une fraction passe de 47 à 11.

L'invention s'applique à tout besoin en énergie notamment dans les régions désertiques.

EP 0 006 653 A2

L'invention se rapporte à un procédé de production d'énergie dans un champ de gravité, caractérisé en ce que celle-ci est obtenue sans consommation de matière.

Aucun procédé de ce genre n'ayant encore été conçu pour l'obtention réelle d'un tel résultat, l'invention concerne en outre tous les dispositifs de mise en oeuvre de ce procédé.

L'objet de l'invention est un procédé de production d'énergie sans consommation de matière au moyen d'un champ de gravité, caractérisé en ce que l'on assujettit un corps annulaire déformable et étanche, de section relativement constante, à une structure $S_1$ par la liaison d'une portion $p_1$ de masse $m_1$ de ce corps et à une structure $S_2$ par la liaison d'une portion $p_2$ de masse $m_2$, les structures $S_1$ et $S_2$ circulant entre deux niveaux le long de chemins fermés et étant elles-mêmes assujetties par toute liaison appropriée à un bâti de référence, fixe ou mobile, à rester dans un milieu exerçant sur ledit corps des forces sensibles de poussées, lesdites liaisons étant choisies pour maintenir des déformations différentes du corps engendrant des forces différentes sur $S_1$ et $S_2$ et en ce que l'on établit une liaison entre $S_1$ et $S_2$ pour qu'à tout déplacement $ds_1$ de $S_1$, amenant une fraction de masse $dm$ de $p_1$ à la partie inférieure de $S_1$, ne corresponde qu'un déplacement $ds_2$ de $S_2$ amenant une fraction de masse $dm$ de $p_2$ à la partie supérieure de $S_2$ et en ce que l'on choisit la différence de niveaux entre les parties supérieure et inférieure de $S_1$ et $S_2$ suffisamment grande pour que les différences des forces résultantes sur $S_1$ et $S_2$ assurent les déplacements $ds_1$ et $ds_2$, le transfert de la fraction de masse $dm$ de $p_1$ de $S_1$ à $S_2$ et le transfert de la masse $dm$ de $p_2$ de $S_2$ à $S_1$ ramenant ainsi l'ensemble au cours de ce cycle élémentaire dans des conditions semblables aux conditions initiales.

L'énergie potentielle $E_0$ disponible due aux conditions initiales peut être choisie très supérieure aux énergies qui pourraient être produites par un certain nombre de déplacements successifs $ds_1$ et $ds_2$ de $S_1$ et $S_2$, même sans restauration de conditions similaires aux conditions initiales lors du transfert des fractions de masses d'une structure sur l'autre. C'est pour cette raison qu'il est toujours possible, dès que l'on utilise une dénivellation suffisante, de disposer d'une énergie $E_0$ bien supérieure à l'énergie dépensée pour déformer à chaque cycle élémentaire une fraction $dm$ dans son transfert de $S_1$ à $S_2$ ainsi

qu'une fraction dm de $S_2$ à $S_1$ afin de rétablir des conditions de déséquilibre invariable, le niveau du milieu considéré restant constant sous le seul effet du mouvement des masses résultant du champ de gravité et des poussées.

Un autre objet de l'invention est d'accroître le couple disponible au cours de la circulation du corps annulaire en donnant à la portion $p_1$ une masse volumique supérieure à celle du milieu et à la portion $p_2$ une masse volumique inférieure à celle dudit milieu.

Un autre objet de l'invention est de réduire les écarts de vitesse des structures $S_1$ et $S_2$ en donnant aux masses $m_1$ et $m_2$ des portions $p_1$ et $p_2$ des valeurs sensiblement égales.

D'autres objets et caractéristiques de l'invention apparaitront au cours de la description suivante faite en référence aux dessins annexés qui représentent, à titre d'exemple non limitatif, un mode de réalisation schématique de mise en oeuvre de l'invention.

Sur les dessins :

la figure 1 est une représentation schématique en élévation de l'ensemble des structures,

la figure 2 est une représentation schématique de la coupe II-II avec arrachement d'une partie du corps annulaire en dessous de cette coupe,

la figure 3 la représentation schématique de la coupe III-III et

la figure 4, la représentation schématique d'une portion du corps annulaire dans ses états contracté et dilaté.

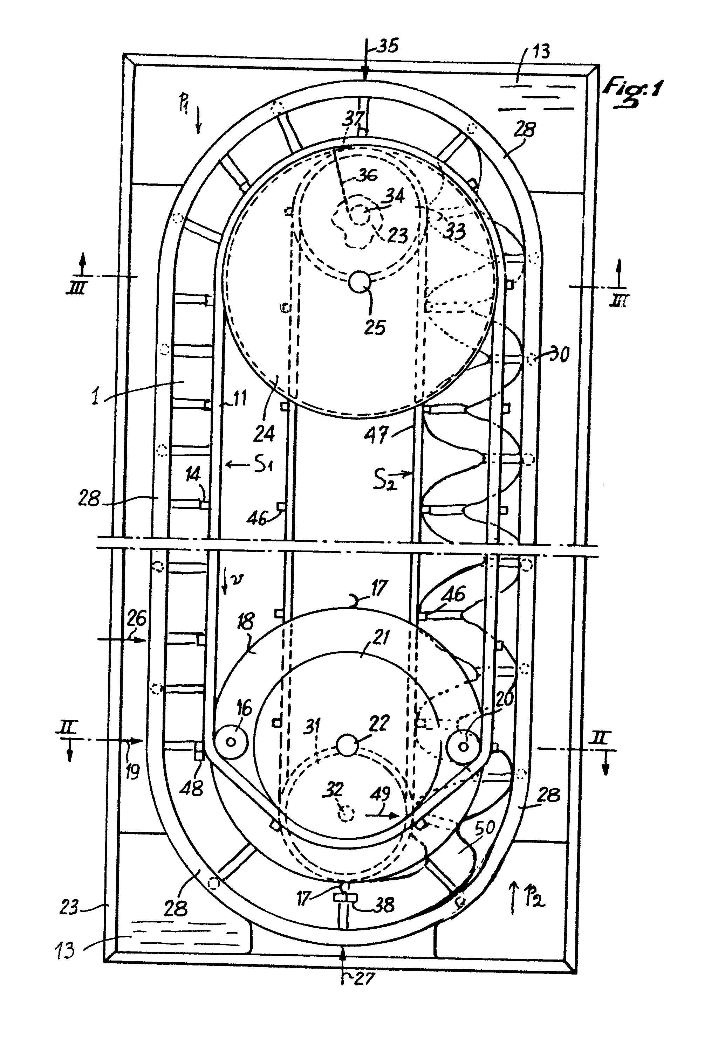

Le corps 1, représenté schématiquement figures 1 à 4, peut être tout corps déformable et étanche, plein ou creux, conservant une section transversale relativement constante au cours des déformations successives auxquelles il est soumis. A titre d'exemple, il peut être constitué d'anneaux rigides télescopiques, chacun étant formé d'un corps 2, figure 4, de section donnée, se rapprochant sur cette figure d'un rectangle à coins arrondis. Ils comportent à une extrémité une membrane 3, le corps 2 se terminant à l'autre extrémité par une partie 4, de plus faible section, reliée vers son milieu à la membrane 5 de l'anneau 6-8 suivant. Lorsque deux anneaux successifs 10-12 sont rapprochés, leur membrane commune 7 pénètre à l'intérieur de l'un des anneaux 10 en se retournant. Chaque anneau 12 ou une partie d'entre-eux peut porter tout support approprié 9 d'un dispositif de liaison 44, qu'il s'agisse d'un simple moyen de guidage ou de verrouillage.

D'une façon générale, on comprendra que l'exemple servant à illustrer la mise en oeuvre du procédé fait intervenir des moyens qui peuvent être quelconques et ne sont donc représentés que schématiquement. Ils n'ont été choisis que pour la simplicité de l'exposé à seule fin d'illustrer la généralité du procédé, quelles que soient les variantes utilisées.

Sur les dessins, le corps 1 se trouve lié à une structure $S_1$ composée des chaînes ou des courroies 11 pour maintenir la portion $p_1$ du corps 1 de masse $m_1$ dans une position où tous ses anneaux sont rapprochés, ce qui dans l'exemple choisi confère à cette partie $p_1$ une masse volumique de valeur supérieure à celle du milieu 13 dans lequel il est plongé.

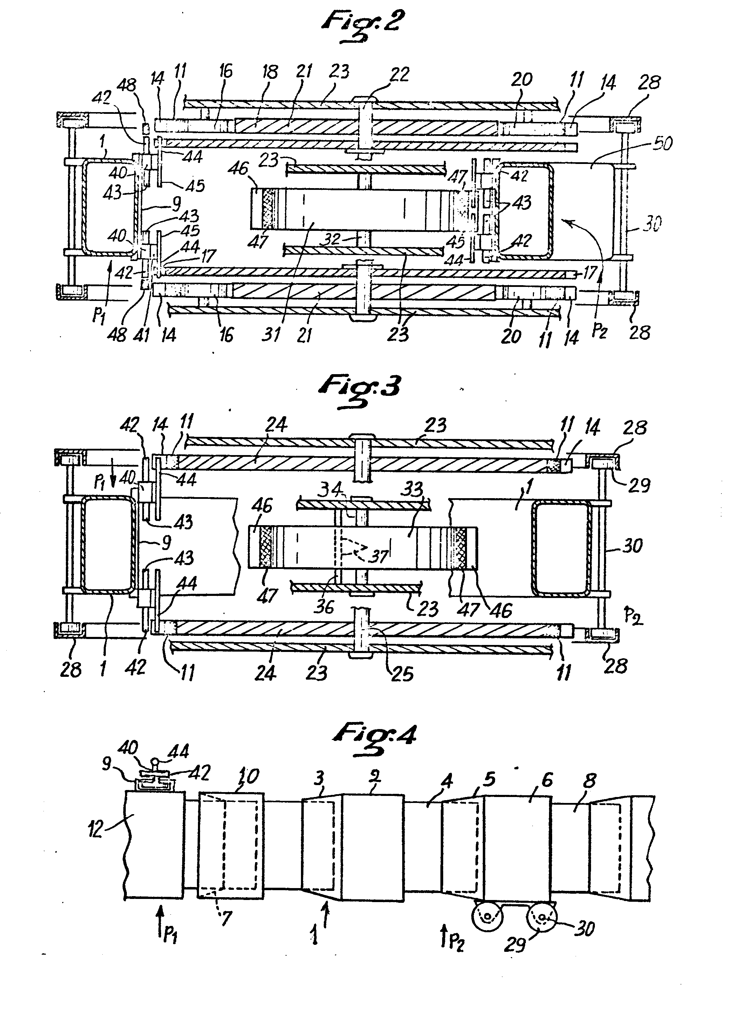

Sur cette portion $p_1$ du corps 1, les dispositifs de liaison, montés sur les glissières 9 des anneaux tels que 12 et servant à fixer $p_1$ à la structure $S_1$, se trouvent dans des positions semblables à celles représentées en $p_1$ figures 2 et 3. Chaque glissière 9 comporte deux pièces coulissantes 40. Ces pièces entraînent lorsqu'elles sont déplacées, d'une part, des bras de liaison 44 destinés à coopérer avec les bagues ou crochets 14 des chaînes 11 figure 3 et, d'autre part, des bras de liaison 45 figure 2 servant en $p_2$ à l'entraînement de la structure $S_2$ figure 1 formée de la chaîne ou courroie 47 pourvue des bagues ou crochets 46. Dans la position des pièces 40 représentées en $p_1$ figure 3, les bras 44 assurent la liaison des chaînes 11 avec les anneaux de $p_1$ tels que 12 figure 4, c'est-à-dire aux anneaux pourvus d'une glissière 9 et se trouvant télescopiquement rapprochés d'un anneau 10 adjacent.

Cette disposition peut se retrouver sur l'ensemble de la portion $p_1$ du corps 1 pouvant aller de la flèche 35, figure 1, à la flèche 19 et dont la position correspond à un renvoi des chaînes 11 qui passent autour des poulies 16 et 20 en entraînant les roues dentées 21 d'axes 22. Celles-ci se trouvent dans les plans des roues dentées 24 supportant les chaînes 11 et tournent autour des axes 25 montés sur le bâti 23. Dans la zone de la flèche 19, un premier jeu de cames fixes 48, figures 1 et 2, déplace les galets de commande 42 des pièces 40 des dispositifs de liaison de la portion représentée en $p_1$ figure 3 à la position indiquée en $p_1$ figure 2 lorsque ces galets passent en regard des

4　　　0006653

cames 48 dans le sens de la flèche v.

Ce déplacement, dû à la résultante de l'action du champ de gravité sur la masse $m_1$ de la portion $p_1$ et de l'action des forces de poussées dont une partie est absorbée par la réaction de la structure $S_1$ sur les éléments de guidage, dépend fondamentalement de la fixation de la position $p_1$ sur $S_1$. La partie $p_1$ crée donc, par sa liaison aux chaînes 11 supportées par les roues 24, un certain couple d'axe 25 de même sens que la flèche v. La structure $S_2$ n'exerçant aux extrémités de $S_1$ aucune action contraire comme on le verra plus loin, on profite de ce couple pour faire passer la fraction de masse dm de la portion $p_1$ de masse $m_1$, de sa masse volumique supérieure à celle du milieu 13 à une masse volumique inférieure à celle de ce milieu par simple écartement des anneaux composant cette fraction et, dans le cas considéré, avant son transfert sur la structure $S_2$. A cet effet, le rayon des roues dentées 21 est choisi pour que les roues dentées 18 qu'elles entrainent aient une vitesse périphérique supérieure à la vitesse v des chaînes 11. Les roues 18 portant par exemple quatre crochets 17 espacés entre eux sur un arc de longueur double de celle de la fraction de $p_1$ de masse dm délimitée par les flèches 19 et 26, on voit que lorsque les crochets 17 des roues 18 entraînent le premier anneau de $p_1$ se trouvant en regard de la flèche 19 jusqu'à la position de la flèche 27 en prenant appui sur les bras 44 à une vitesse double de celle des chaînes 11 entraînant les roues 21, la fraction du corps 1, primitivement comprise entre les flèches 26 et 19, a une masse dm qui s'étend alors pratiquement sur une longueur double de celle comprise entre les flèches 26 et 19.

Lorsque les crochets 17 parviennent en regard de la flèche 27, l'anneau en regard du corps 11 est alors rendu solidaire de la structure $S_2$ composée de la chaîne 47 pourvue des bagues ou crochets de liaison 46. A cet effet, deux cames fixes 38, figure 1, repoussent encore les galets 42 de commande du transfert des bras 45 sur la bague ou le crochet 46 de la chaîne 47, le déplacement des galets 42 entraînant en outre le retrait des bras 44 hors des crochets 17 des roues 18, de sorte que la liaison du corps 1 à la structure $S_2$ est celle indiquée en $p_2$ figure 2.

Dans l'exemple choisi, la chaîne 47 se déplace à la même vitesse v que les chaînes 11 en circulant autour de la roue dentée 31 d'axe 32 et de la roue 33 d'axe 34. Dans l'exemple choisi, les bagues 46 sont espacées de la même longueur que celle séparant deux bagues 14 sur les chaînes 11. On remarquera donc que la longueur de la fraction du corps 1, comprise entre l'anneau de la structure $S_2$ situé en regard de la flèche 49 et l'anneau précédent en regard de la flèche 27 en cours de transfert sur $S_2$, est égale à la fraction de masse dm comprise entre les flèches 19 et 27 et double de la fraction supportée par $S_1$ entre les flèches 26 et 19. Il en résulte que le passage de la fraction de masse dm de la structure $S_1$ à la structure $S_2$ s'accompagne de la formation de lobes tels que 50, figure 2, dont la masse volumique peut être choisie inférieure à celle du milieu 13. On peut régulariser la formation de ces lobes à l'aide de la structure de guidage 28 en forme de rails dans lesquels circulent les galets 29 des chariots 30 portés par les anneaux tels que 6, figure 4. Ces anneaux étant à mi-chemin entre deux anneaux porteurs des glissières 9 des dispositifs de liaison délimitant chaque fraction $dp_1$ sur $S_1$ ou chaque fraction $dp_2$ sur $S_2$ de même masse dm, on voit que le corps 1, figure 1, se présente sous une forme linéaire et contractée sur la portion $p_1$ entre les flèches 35 et 19 et sous une forme lobée sur $S_2$, les anneaux médians porteurs des chariots 30 étant maintenus écartés de la chaîne 47 par l'éloignement de la structure 28 à partir de la flèche 27, seuls les anneaux porteurs de moyens de liaison 9 restant sur la chaîne 47 jusqu'à la position de la flèche 35.

Inversement, la structure de guidage 28 se rapprochant progressivement dans sa partie supérieure de la chaîne 47 engrenant avec la roue 33, les anneaux porteurs des chariots 30 s'alignent à nouveau avec les autres anneaux. Afin de rendre plus visible la formation des lobes à la partie inférieure de $S_2$, la partie supérieure du corps 1, figure 2, a été arrachée de la zone délimitée par la flèche 49, figure 1, et par le niveau de la coupe II-II.

A la partie supérieure du bâti 23, un étrier 36 porte une partie coudée 37 destinée à servir de came pour repousser les galets 43 lors du déplacement de la chaîne 47 formant la structure $S_2$ de façon à ramener ainsi les bras de liaison 44, 45 dans la position représentée en $p_1$, figure 3. Ce déplacement résulte, comme le déplacement de $S_1$, de la liaison de $p_2$ du corps 1 à $S_2$, mais ici les lobes créés entraînent une résultante des forces de poussées suffisantes pour contrebalancer l'action de la pesanteur sur $m_2$. On remarquera aussi que le rapprochement des rails 28 de la chaîne 47 en 35 ayant ramené la fraction $dp_2$ à la longueur primitive $\ell$ séparant deux anneaux équipés des glissières 9 sur $p_1$, le système reprend après ce cycle élémentaire une configuration similaire à celle qui lui avait été initialement donnée.

Par construction, même les différences de positionnement des fractions du corps 1 liées à $S_1$ et $S_2$ entraînant des différences entre les résultantes des forces de poussée et des poids de façon que $S_1$ et $S_2$ aient tendance à se déplacer sous les effets des deux couples de même sens ainsi créés, il est clair que l'on peut toujours accroître, à défaut de l'accroissement des différences des forces résultantes entre les niveaux N et N+dN, la dénivellation entre les extrémités des portions $p_1$ et $p_2$ pour que le nombre n d'intervalles dN constituant cette dénivellation soit aussi grand qu'on le désire pour réaliser les déplacements $ds_1$ de $S_1$ et $ds_2$ de $S_2$, ainsi que les transferts des fractions extrêmes de masse dm. En particulier, dans le cas de la figure 1 où les lobes 50 ont en outre une masse volumique inférieure à celle du milieu 13, la structure $S_2$ ne peut qu'être sollicitée pour déplacer son centre de gravité vers le haut à l'inverse de la structure $S_1$. Dans ces conditions, si l'on désigne par e toutes les énergies perdues par le système pour le transfert des fractions extrêmes de masse dm et par les frottements des pièces en mouvements, il est clair qu'il suffit d'accroître l'intervalle séparant les axes 22 et 34 pour obtenir une énergie totale disponible E bien supérieure à e, les fractions transférées dm conservant la même valeur.

On voit de même que le procédé n'est pas modifié si les énergies disponibles sur $S_1$ et $S_2$ ne sont pas égales, si les chemins de $S_1$ et $S_2$ sont différents de ceux représentés, si la longueur de l'anneau est suffisante pour obtenir un déplacement $ds_1$ de $S_1$ pendant l'arrêt de la structure $S_2$ de façon à opérer des déplacements successifs de $S_1$ et de $S_2$ au lieu de déplacements simultanés, que les déplacements $ds_1$ et $ds_2$ peuvent être inégaux dès l'instant qu'au cours d'un cycle élémentaire défini par les deux déplacements $ds_1$ et $ds_2$ la même fraction de masse dm est transférée de $S_1$ à $S_2$ et de $S_2$ à $S_1$ aux extrémités des structures, que l'ordre de succession des opérations pour un cycle élémentaire peut être quelconque, que toute ou partie de ces opérations de transfert comportant toute transformation désirée de configuration avec ou sans variation de la masse volumique des fractions dm peut être accomplie par l'action de l'une ou des deux structures, synchronisées ou non, avec ou sans utilisation d'un volant d'énergie fourni par le système, ou par l'une ou l'autre des structures, ou même par l'extérieur.

Quant aux structures définies par le procédé, il est clair qu'elles peuvent être de tout type dès l'instant qu'elles concourent à la mise en oeuvre du procédé ou de ses variantes, le cycle élémentaire défini pouvant être modifié tout en conservant l'esprit général de l'invention.

Il en résulte que l'on ne sortirait pas du cadre de l'invention en prévoyant des corps annulaires formés d'un soufflet pourvu d'armatures pour éviter toute déformation trop prononcée de la section, ces armatures pouvant être intérieures ou extérieures pour comporter tous moyens de guidage, de maintien des plis dans une position donnée, et de liaison aux structures $S_1$ et $S_2$. Ces structures peuvent prendre toute forme désirée et appartenir éventuellement à une même structure. A titre d'exemple, les chaînes 11 et 47, lorsqu'elles circulent à même vitesse, peuvent être remplacées par un seul support dont la partie descendante porteur de $p_1$ constitue $S_1$ et la partie ascendante portant $p_2$ la structure $S_2$. De même, les moyens d'extension dans le cas de changement de masse volumique peuvent être linéaires et s'effectuer sur une partie horizontale ou verticale, les moyens d'entraînement de l'extrémité de $p_1$ à plus grande vitesse que $S_1$ pouvant être obtenus par un mouvement alternatif au lieu de l'entraînement circulaire de l'exemple représenté. De même, les moyens de liaison du corps peuvent être obtenus par des moyens appartenant exclusivement ou non à $S_1$ et à $S_2$. Quant aux liaisons de synchronisations entre $S_1$ et $S_2$, elles peuvent satisfaire à toute loi désirée. Dans l'exemple choisi, les vitesses périphériques des roues 23 et 24 sont identiques. L'énergie cinétique développée peut de même être prise en tous endroits désirés, avec ou sans utilisation de volant, la récupération d'énergie pouvant encore s'effectuer sous forme thermique.

Ainsi, l'invention concerne tout dispositif dont le déséquilibre initial de deux structures $S_1$ et $S_2$ dû aux liaisons des portions $p_1$ et $p_2$ d'un corps annulaire est rétabli pour chaque déplacement $ds_1$ et $ds_2$ de $S_1$ et $S_2$ par transfert des fractions correspondantes de masse dm de $S_1$ à $S_2$ à la partie inférieure du dispositif et transfert de $S_2$ à $S_1$ à la partie supérieure.

REVENDICATIONS

1°) Procédé de production d'énergie sans consommation de matière au moyen d'un champ de gravité, caractérisé en ce que l'on assujettit un corps annulaire déformable et étanche, de section relativement constante, à une structure $S_1$ par la liaison d'une portion $p_1$ de masse $m_1$ de ce corps et à une structure $S_2$ par la liaison d'une portion $p_2$ de masse $m_2$, les structures $S_1$ et $S_2$ circulant entre deux niveaux le long de chemins fermés et étant elles-mêmes assujetties par toute liaison appropriée à un bâti de référence, fixe ou mobile, à rester dans un milieu exerçant sur ledit corps des forces sensibles de poussées, lesdites liaisons étant choisies pour maintenir des déformations différentes du corps engendrant des forces différentes sur $S_1$ et $S_2$ et en ce que l'on établit une liaison entre $S_1$ et $S_2$ pour qu'à tout déplacement $ds_1$ de $S_1$, amenant une fraction de masse $dm$ de $p_1$ à la partie inférieure de $S_1$, ne corresponde qu'un déplacement $ds_2$ de $S_2$ amenant une fraction de masse $dm$ de $p_2$ à la partie supérieure de $S_2$ et en ce que l'on choisit la différence de niveaux entre les parties supérieure et inférieure de $S_1$ et $S_2$ suffisamment grande pour que les différences des forces résultantes sur $S_1$ et $S_2$ assurent les déplacements $ds_1$ et $ds_2$, le transfert de la fraction de masse $dm$ de $p_1$ de $S_1$ à $S_2$ et le transfert de la masse $dm$ de $p_2$ de $S_2$ à $S_1$ ramenant ainsi l'ensemble au cours de ce cycle élémentaire dans des conditions semblables aux conditions initiales.

2°) Procédé tel que revendiqué en 1 dont la portion $p_1$ du corps liée à la structure $S_1$ a une masse volumique supérieure à celle du milieu exerçant les forces de poussées, la partie $p_2$ liée à $S_2$ ayant une masse volumique inférieure à celle dudit milieu.

3°) Procédé tel que revendiqué dans l'une quelconque des revendications 1 et 2 dont le cycle élémentaire comprend une opération d'élongation et une opération de contraction du corps déformable.

4°) Procédé tel que revendiqué dans l'une quelconque des revendications 1 à 3 dont le cycle élémentaire comprend une opération de pliage et de dépliage du corps déformable.

5°) Procédé tel que revendiqué en 4 dont l'opération de pliage est précédée d'une opération d'élongation.

6°) Procédé tel que revendiqué dans l'une quelconque des revendications 1 à 5 dont les valeurs des masses des portions $p_1$

et $p_2$ liées à $S_1$ et à $S_2$ sont sensiblement égales.

7°) Procédé tel que revendiqué dans l'une quelconque des revendications 1 à 6 dont les liaisons de $p_1$ à $S_1$ créent une force résultante tendant à elle seule à déplacer $S_1$ de $ds_1$, la liaison de $p_2$ à $S_2$ créant à elle seule une force résultante tendant à déplacer $S_2$ de $ds_2$.

8°) Procédé tel que revendiqué dans l'une quelconque des revendications 1 à 7 selon lequel les structures $S_1$ et $S_2$ constituent une seule structure, $p_1$ étant liée à la partie descendante et $p_2$ à la partie ascendante.

9°) Procédé tel que revendiqué dans l'une quelconque des revendications 1 à 7 selon lequel les déplacements $ds_1$ et $ds_2$ ont lieu successivement.

10°) Dispositif de mise en oeuvre du procédé revendiqué dans l'une quelconque des revendications 1 à 9, caractérisé en ce qu'il comprend un corps annulaire déformable et étanche de section relativement constante, un moyen assurant la liaison d'une portion $p_1$ à une structure $S_1$ et d'une portion $p_2$ à une structure $S_2$, $S_1$ et $S_2$ parcourant des chemins fermés et un moyen assurant, pour chaque déplacement $ds_1$ et $ds_2$ de $S_1$ et de $S_2$, le transfert d'une fraction $dp_1$ de $S_1$ à $S_2$ à la partie inférieure et le transfert d'une fraction $dp_2$ de $S_2$ à $S_1$ à la partie supérieure, lesdites liaisons assurant et maintenant sur $p_1$ et sur $p_2$ les déformations caractéristiques choisies sur $S_1$ et sur $S_2$.

11°) Dispositif tel que revendiqué en 10 comportant en outre un moyen de transformation de la déformation du corps 1 sur $S_1$ pour l'amener à prendre la déformation sur $S_2$ et pour ramener la déformation sur $S_2$ à celle de $S_1$ lors des transferts des fractions du corps aux parties inférieure et supérieure du dispositif.

12°) Dispositif tel que revendiqué en 11 dont le moyen de transformation est un dispositif de pliage et de dépliage.

13°) Dispositif tel que revendiqué en 11 dont le moyen de transformation est un dispositif d'élongation et de contraction.

14°) Dispositif tel que revendiqué en 11 dont le moyen de transformation est un dispositif d'élongation avec pliage et de contraction avec dépliage.

15°) Dispositif tel que revendiqué dans l'une quelconque des revendications 10 à 14 dont les vitesses des structures $S_1$ et $S_2$ sont les mêmes.

16°) Dispositif tel que revendiqué dans l'une quelconque

0006653

des revendications 10 à 15 dont les structures $S_1$ et $S_2$ sont constituées par deux zones d'une même structure.

17°) Dispositif tel que revendiqué dans l'une quelconque des revendications 1 à 15 dont l'une des structures est guidée par des chemins en partie circulaires et en partie rectilignes.

0006653

Fig:1

0006653

## Fig.2

## Fig.3

## Fig.4